# EUROPEAN PATENT APPLICATION

(11) **EP 2 743 452 A1**
(43) Date of publication of application: **18.06.2014**
(21) Application number: 13196762.2
(22) Date of filing: 11.12.2013
(51) Int. Cl.: F01D 5/14, B23P 15/04, B22F 5/04

(54) **Methods of manufacturing divided blades of turbomachines by additive manufacturing**

(30) Priority: 13.12.2012 IT CO20120058
(71) Applicant: Nuovo Pignone S.p.A., 50127 Florence (IT)
(72) Inventor: Giovannetti, Iacopo, Florence 50127 (IT); Cosi, Lorenzo, Florence 50127 (IT); Innocenti, Mirco, 50127 Firenze (IT); Piraccini, Francesco, Florence 50127 (IT); Tozzi, Pierluigi, Florence 50127 (IT)
(74) Representative: Illingworth-Law, William Illingworth

(57) **Abstract**

The method is used for manufacturing a turbomachine blade that comprises an airfoil portion (1) and is divided into two parts (P1, P2) at an intermediate region (5) of the airfoil portion (1); each of the two parts (P1, P2) of the airfoil portion (1) is obtained by additive manufacturing; the two parts (P1, P2) are joined by brazing.

## Description

### TECHNICAL FIELD

Embodiments of the subject matter disclosed herein generally relate methods of manufacturing blades for turbomachines.

### BACKGROUND ART

In steam turbines, partial condensation of the steam occurs at their last stage or stages.

In particular condensation occurs on the airfoil portion of the stator blades of a so-called "condensing stage", typically the last stage of the turbine.

If droplets are generated as a consequence of condensation, they leave the static stator blades and they hit the rotating rotor blades; therefore, damages to the rotor blades may occur.

In order to reduce the damages caused by the droplets, the rotation speed of the rotor blades may be reduced; but in this way, the efficiency of the turbine is also reduced.

Alternatively, in order to reduce any damage on the rotor blades, solutions exist for collecting the condensation before the generation of droplets.

The most typical of these solutions consists in using hollow stator blades where condensation is likely to occur, providing holes or slots through the airfoil portion of the blades extending from the airfoil surface to the internal cavity, and sucking from the internal cavity so to that any condensation leaves the airfoil surface and enters the internal cavity. In this way, droplets on the airfoil surface of the stator blades are not generated and released.

These hollow blades are typically obtained through milling two metal bars, welding them together and mill finishing the assembled component, in order to produce the blades with a reasonable precision while avoiding the high cost of casting.

In gas turbines, hollow blades are sometime used for rotor blades in order to reduce weight of the rotating element.

These hollow blades are typically obtained through casting, particularly "investment casting", in order to obtain a rotating element having an extremely precise shape and size.

### SUMMARY

Therefore, there is a general need for improving the blades of turbomachines both in terms of performance and manufacturing.

For example, it is always desirable to have a high precision and a low production cost.

Ideally, in order to achieve high performances, the shape, size and material(s) of the blade should be freely selectable along its whole length.

Such general need is particularly felt for the hollow stator blades of steam turbines; these blades are generally located at the last stage or stages of a multistage steam turbine; these blades are very often made of metal.

A main aspect of the present invention is a method of manufacturing a turbomachine blade.

According to embodiments thereof, the method is used for manufacturing a turbomachine blade comprising an airfoil portion and being divided into two parts at an intermediate region of the airfoil portion; each of said two parts of said airfoil portion is obtained by additive manufacturing; said two parts are joined by brazing.

Such method allows to manufacture very long blades.

It is to be noted that the trailing edge of the blade, which is usually very thin, is not spoiled by the brazing operation; furthermore, the use of one or more dowel pins assure a perfect alignment and stability of the trailing edges of the two parts if brazing is not carried out on these portions.

Advantageous technical features of the present invention are set out in the detailed description.

### BRIEF DESCRIPTION OF DRAWINGS

The accompanying drawings, which are incorporated herein and constitute a part of the specification, illustrate an embodiment of the present invention and, together with the description, explain this embodiment. In the drawings:
Fig. 1 shows a side view of a blade according to the present invention,
Fig.2 shows a perspective view of a first part of the blade of Fig.1 comprising a root portion,
Fig.3 shows a perspective view of a second part of the blade of Fig.1 comprising a shroud portion,
   and
Fig.4 shows a perspective and cross-section view of a detail of the blade of Fig. 1 where the first part and the second part of the blade are joined together.

### DETAILED DESCRIPTION

The following description of an exemplary embodiment refers to the accompanying drawings. The same reference numbers in different drawings identify the same or similar elements. The following detailed description does not limit the invention. Instead, the scope of the invention is defined by the appended claims.

Reference throughout the specification to "one embodiment" or "an embodiment" means that a particular feature, structure, or characteristic described in connection with an embodiment is included in at least one embodiment of the subject matter disclosed. Thus, the appearance of the phrases "in one embodiment" or "in an embodiment" in various places throughout the specification is not necessarily referring to the same embodiment. Further, the particular features, structures or characteristics may be combined in any suitable manner in one or more embodiments.

In the following, a hollow stator blade of a multistage steam turbine entirely made of metal will be described as it is a very typical application of the present invention; in particular, this blade is designed for an axial flow turbine.

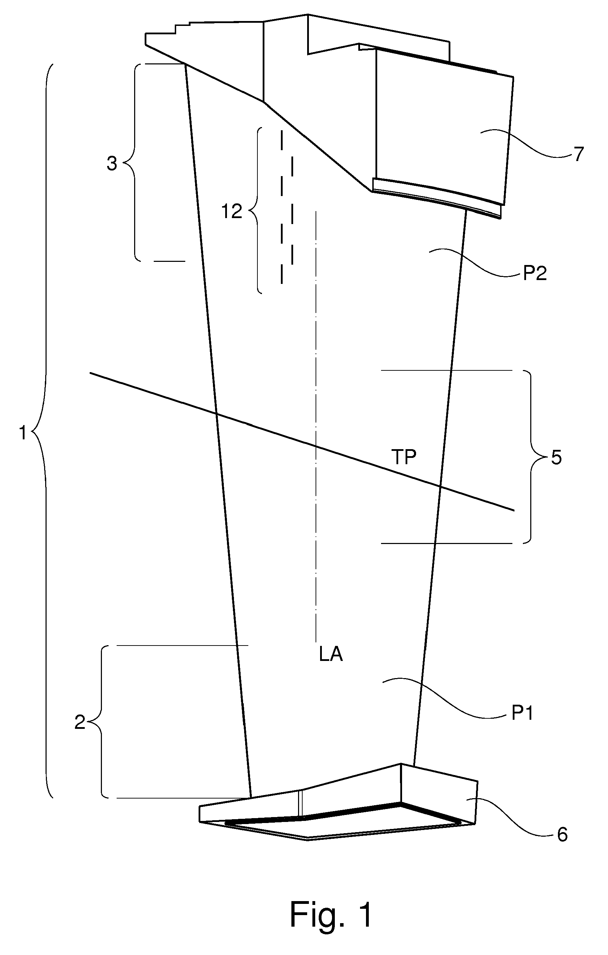

The blade of the embodiment Fig.1 comprises an airfoil portion 1 that extends longitudinally for a length and has a first end region 2, a second end region 3 and an intermediate region 5; according to the embodiment of Fig.1, the intermediate region 5 is exactly in the center of the airfoil portion 1 and is separate and distant from both the first end region 1 and the second end region 3. The airfoil portion 1 is defined laterally (and externally) by an airfoil surface and has at least one internal cavity 4 (not shown in Fig.1) extending along said length; the internal cavity 4 reduces the weight of the blade, the quantity of material necessary for its production and collects condensation from the airfoil surface.

It is to be noted that instead of a single internal cavity extending along the airfoil portion a set of internal cavities extending along the airfoil portion may be provided in the airfoil portion; in this case, the cavities may be isolated from each other in order to provide independent suctions of condensation and/or blows of cold or hot gases.

The airfoil portion 1 is divided into at least two parts P1 and P2; the division is located at the intermediate region 5; in particular, the division is made according to a plane, but, more in general, the division could be made according to a three-dimensional surface. According to the embodiment of Fig.1, the division plane is a plane TP that is transversal to the airfoil portion 1, specifically to a longitudinal axis LA of the airfoil portion 1; the plane TP and the axis LA form an angle preferably greater than 0° and smaller than 45°, more preferably approximately equal to 10°. According to the embodiment of Fig.1, the internal cavity 4 extends entirely along the length of the airfoil portion 1; anyway, according to alternative embodiments, it may extends less in the direction of the first end region 2 and/or in the direction of the second end region 3.

It is to be noted that although the blade of Fig.1 is divided into two parts, a division into three or more parts could be implemented according to alternative embodiments. In this case, one or more of the parts will not be adjacent

In order to collect condensation, the airfoil portion may have holes and/or slots extending from the airfoil (external) surface to its internal cavity. According to the embodiment of Fig.1, a set of slots 12 are used; these slots are arranged in two parallel lines in order to provide a sufficient passage for the condensation liquid and to avoid excessive weakening of the blade. As is shown in Fig.1, the slots are located only in the second part P2, especially in the second end region 3, where condensation is more likely to occur.

It is to be noted that instead of a single set of holes or slots located close to each other a plurality of sets may be provided in the airfoil portion in order to, for example, optimize suction of condensation in different areas of the airfoil surface.

The blade of the embodiment Fig.1 comprises also a root portion 6 and a shroud portion 7; the root portion 6 is adjacent to the first end region 2 of the airfoil portion 1 and the shroud portion 7 is adjacent to the second end region 3 of the airfoil 1.

For best performances and construction of the stator blades row of the turbine stage, the root portion 6 and the first part P1 of the airfoil portion 1 are made in a single piece and the shroud portion 7 and the second part P2 of the airfoil portion 1 are made in a single piece.

It is to be noted that although the blade of Fig.1 is divided into two parts, a division into three or more parts could be implemented according to alternative embodiments. In this case, only one part will be adjacent to the root portion, only one part will be adjacent to the shroud portion, and one or more of the parts will not be adjacent either to the root portion or to the shroud portion. A multiple division allows a higher design flexibility even if a higher construction complexity.

The first P1 and the second part P2 of the airfoil portion 1 are joined together; push fit is used in combination with brazing.

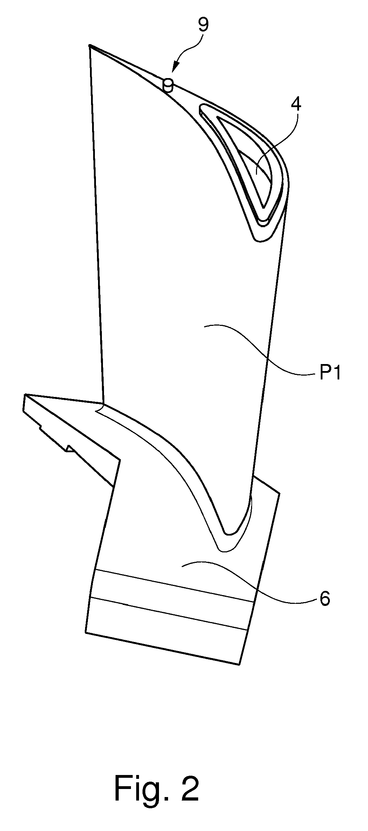

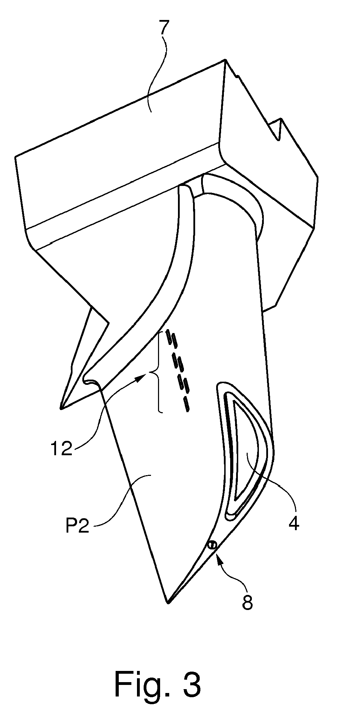

A first measure for obtaining a good and stable join of the two parts P1 and P2 is to provide at least one hole-pin pair on these two parts. According to the embodiment of Fig.1, a part of the airfoil portion 1, in particular part P1, is provided with a dowel pint 9 (see Fig.2) at the intermediate region 5, specifically at the interface between the two parts P and P2; correspondingly, the other part of the airfoil portion 1, in particular part P2, is provided with a hole 8 (see Fig.3) at the intermediate region 5, specifically at the interface between the two parts P1 and P2; by coupling the two parts P1 and P2 together, the dowel pin 9 is inserted into the hole 8; it is to be noted that the hole-pin pair of the embodiment of Fig.1 is located in the trailing edge region of the airfoil portion 1 of the blade, i.e. where the airfoil portion is quite thin. It is to be that, according to alternative embodiments, the number of hole-pin pairs may be more than one. It is also to be noted that, according to alternative embodiments, the dowel pin may be a separated component (i.e. not integrated in one of the parts); in this case both parts have a hole and the pin is inserted in both holes.

According to the embodiment of Fig.1, the parts P1 and P2 of the airfoil portion 1 are joined together by push fit; no brazing is carried out where the hole 8 and the dowel pin 9 are located, i.e. at the trailing edge portions of the two parts P1 and P2.

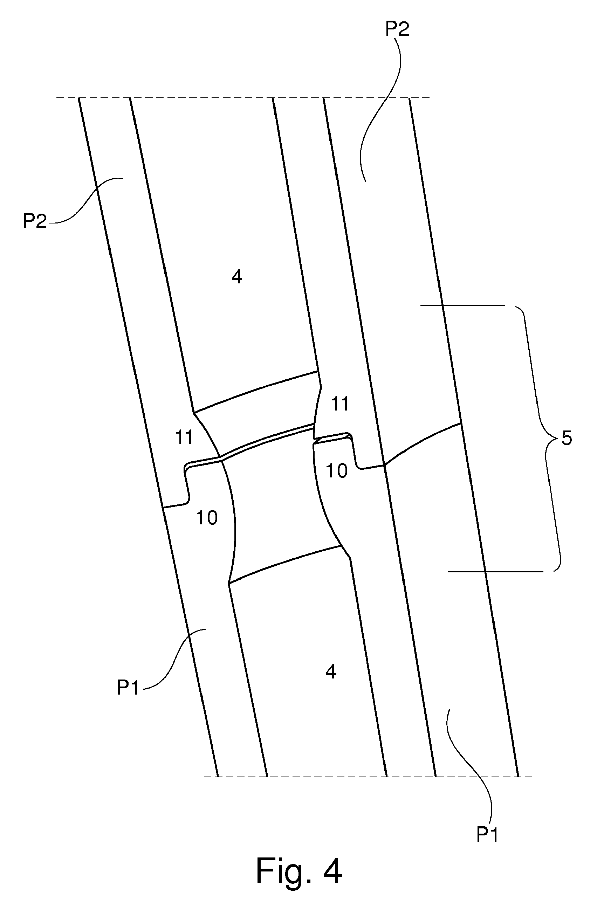

A second measure for obtaining a good and stable join of the two parts P1 and P2 is to provide these two parts with lipped rims. According to the embodiment of Fig.1, a part of the airfoil portion 1, in particular part P1, is provided with a male-type lipped rim 10 (see Fig.2 and Fig.4) at the intermediate region 5, specifically at the interface between the two parts P and P2; correspondingly, the other part of the airfoil portion 1, in particular part P2, is provided with a female-type lipped rim 11 (see Fig.3 and Fig. 4) at the intermediate region 5, specifically at the interface between the two parts P and P2; in this way, a female-male connection (see Fig. 4) between these parts is established.

According to the embodiment of Fig.1, the parts P1 and P2 of the airfoil portion 1 are joined together by brazing where rim 10 and rim 11 are located, i.e. at the leading edge portions and the intermediate (i.e. intermediate between leading edge and trailing edge) portions of the two parts P1 and P2.

In order to facilitate the realization of the connection means between the two parts of the airfoil portion, it might be necessary to reduce the cross-section of the internal cavity at the intermediate region of the airfoil portion; in other words, to increase the width of the walls of the two parts at the intermediate region of the airfoil portion without modifying the airfoil, i.e. external, surface of the airfoil portion; preferably the cross-section reduction is gradual. According to the embodiment of Fig.1, the cross-section reduction, i.e. the wall increase, is localized where the lipped rims 10 and 11 are located (see Fig.4).

The surface defining the internal cavity 4 is free from steps, in particular smooth; this facilitates and optimizes the production of the blade by means of additive manufacturing.

Apart from the intermediate region 5, it is possible that the cross-section of the internal cavity 4 increases gradually from the first end region 2 to the intermediate region 5 and/or that it increases gradually from the second end region 3 to the intermediate region 5.

As already explained, one of the reasons for the internal cavity of the airfoil portion of the blade may be to collect condensation; in this case, condensation must be discharge from the cavity; different alternatives may be provided for the condensation discharge.

A first possibility is that the internal cavity reaches the first end region next to the root portion and the discharge occurs through the root portion.

A second possibility is that the internal cavity reaches the second end region next to the shroud portion and the discharge occurs through the shroud portion.

A third possibility is that the internal cavity ends before the first end region, next to the root portion, and there are one or more through holes starting from the internal cavity and reaching the first end region so that the discharge occurs through the root portion.

A fourth possibility is that the internal cavity ends before the second end region, next to the shroud portion, and there are one or more through holes starting from the internal cavity and reaching the second end region so that the discharge occurs through the shroud portion.

As explained above the condensation may reach either the root portion and/or the shroud portion; afterwards the condensation may flow along these two portions (for example in case of hollow root or shroud portions) or through these two portions.

The structure of the blade just described is particularly suitable for being produced by additive manufacturing, and this is an important feature of the present invention.

Additive manufacturing has many advantages with respect to the traditional technologies used for turbomachines blades, in particular for stator blades of steam turbines, as it allows a great design flexibility for the external shape of the blade as well as for the internal shape of the blade (in particular its internal cavity or cavities), as it allows to realize even small details in a shape (this includes the production of small blades), as it allows to realize graded materials in a blade (for example the material may vary along the length or height of a blade according to the mechanical and/or chemical requirements of the various specific points of the blade), as it allows a simpler manufacturing process and a lower manufacturing cost.

As far as manufacturing is concerned, it must be considered that in the field of "Oil & Gas" small-lot production is common also because solutions are studied (or at least customized) for a specific client. In general, it is always desirable to have a high precision and a low production cost.

According to a method of manufacturing a turbomachine blade, each of the divided parts of the airfoil portion is obtained by additive manufacturing.

According to a method of manufacturing a turbomachine blade, the divided parts of the airfoil portion are joined by brazing.

Preferably, the additive manufacturing of the first part, i.e. the one adjacent to the root portion, starts from the first end region, i.e. the area close to the root portion, and the additive manufacturing of the second part, i.e. the one adjacent to the shroud portion, starts from the second end region, i.e. the area close to the shroud portion.

In the case of turbomachines blades, in particular stator blades of steam turbines, it is best to provide that additive manufacturing comprises binding granular material or materials - different materials might be used in different places. Typically, the blades are made of metal, and the granular material or one of the granular materials or each of the granular materials is metallic.

In the embodiments (like the embodiment of Fig.1), that are very advantageous, wherein the blade comprises a root portion adjacent to a first part of the two parts of the airfoil portion, the root portion and the first part are obtained in a single piece by additive manufacturing. In this case, due to the fact that the root portion has a cross-section bigger than the airfoil portion and that the increase in cross-section is typically in the form of one or more steps, in order to facilitate and optimize the production of the blade part by means of additive manufacturing, additive manufacturing of the first part should start from the root portion. It is to be noted that, in this way, production of the first part do not require any further subtractive process operation (such as turning, milling, electron discharge machining).

In the embodiments (like the embodiment of Fig.1), that are very advantageous, wherein the blade comprises a shroud portion adjacent to a second part of the two parts of the airfoil portion, the shroud portion and the second part are obtained in a single piece by additive manufacturing. In this case, due to the fact that the shroud portion has a cross-section bigger than the airfoil portion and that the increase in cross-section is typically in the form of one or more steps, in order to facilitate and optimize the production of the blade part by means of additive manufacturing, additive manufacturing of the second part should start from the shroud portion. It is to be noted that, in this way, production of the second part do not require any further subtractive process operation (such as turning, milling, electron discharge machining).

After producing the parts of the airfoil portion (including the root portion and the shroud portion, if the case) separately, they are joined and fixed together.

Fixing is carried out by brazing; prior to brazing a push fit may be provided so that the two parts are correctly and firmly positioned between each other during the brazing operation. According to the embodiment of Fig.1, push fit derives from the two lipped rims 10 and 11.

Preferably, a male-type lipped rim of any of the two parts is inserted into a female-type lipped rim of any other of said two parts, and the brazing operation is carried out where the female-type lipped rim and said male-type lipped rim are located after insertion, precisely where the two lips are located. Referring for example to Fig. 1, after fitting the two parts P1 and P2 together, the whole blade (including root and shroud) can advantageously be placed in a brazing oven.

Finally, in the case of a stator blade of a steam turbine, holes and/or slots extending from the external surface of the airfoil portion to the internal cavity of the airfoil portion (i.e. holes and/or slots transversal to the airfoil portion and to its longitudinal axis) are realized. The best technologies to be used for this operation are EDM (Electrical Discharge Machining) drilling and/or cutting or laser drilling and/or cutting; it is to be noted that, if using a laser-based technology, it is important to control the laser beam and to avoid unintentional drilling and/or cutting of both walls of the airfoil portion.

The blade design according to the present invention, as described in the present description, is advantageously used in a turbomachine.

The blade design according to the present invention is particularly suitable for being used as stator blade of a steam turbine, especially in the last stage or stages of a multistage turbine.

More in general, the blade design according to the present invention may be used as (static or moving) phase separator device for a turbomachine (e.g. a turbine, a compressor, a pump) that gets in contact with a multiphase fluid, typically a combination of liquid and gas.

It is to be noted that the holes or slots may be used for sucking condensation and, alternatively, for ejecting a fluid, typically a hot fluid. It is to be noted that the internal cavities may be more than one and may have the same function or different functions (lightening the blade, cooling the blade, heating the blade, sucking fluid, ejecting fluid).

## Claims

1. A method of manufacturing a turbomachine blade comprising an airfoil portion (1) and being divided into two parts (P1, P2) at an intermediate region (5) of the airfoil portion (1), wherein each of said two parts (P1, P2) of said airfoil portion (1) is obtained by additive manufacturing, and wherein said two parts (P1, P2) are joined by brazing.

2. The manufacturing method of claim 1, wherein said two parts (P1, P2) are directly brazing together.

3. The manufacturing method of claim 1 or 2, wherein the leading edge portions and the intermediate portions of said two parts (P1, P2) are joined by brazing and the trailing edge portions of said two parts (P1, P2) are joined through one or more dowel pins (9).

4. The manufacturing method of claim 1 or 2 or 3, wherein the blade comprises a root portion (6) adjacent to a first part (P1) of said two parts (P1, P2) of the airfoil portion (1) and a shroud portion (7) adjacent to a second part (P2) of said two parts (P1, P2) of the airfoil portion (1), wherein said root portion (6) and said first part (P1) are obtained in a single piece by additive manufacturing and wherein said shroud portion (7) and said second part (P2) are obtained in a single piece by additive manufacturing.

5. The manufacturing method of any of the preceding claims, wherein said airfoil portion (1) extends longitudinally for a length and has a first end region (2) and a second end region (3), wherein said airfoil portion (1) has at least one internal cavity (4) extending along said length.

6. The manufacturing method of any one of the preceding claims, wherein the blade is associated to a longitudinal axis (LA), and wherein said airfoil portion (1) is divided into two parts (P1, P2) by a plane (TP) transversal to said longitudinal axis (LA), said plane (TP) and said longitudinal axis (LA) forming an angle greater than 0° and smaller than 45°.

7. The manufacturing method of any one of the preceding claims, wherein at least one of and preferably each of said parts (P1, P2) of said airfoil portion (1) has at least one hole (8) at said intermediate region (5), and at least one dowel pin (9) is inserted into said at least one hole (8).

8. The manufacturing method of any one of the preceding claims, wherein said two parts (P1, P2) of said airfoil portion (1) are joined together by means of a push fit, wherein a first part (P1) of said parts (P1, P2) of said airfoil portion (1) has a male-type lipped rim (10), and wherein a second part (P2) of said parts (P1, P2) of said airfoil portion (1) has a female-type lipped rim (11), so that a female-male connection between said parts (P1, P2) of said airfoil portion (1) is established.

9. The manufacturing method of claim 5 or any claim dependent on claim 5, wherein the cross-section of said at least one internal cavity (4) is reduced at said intermediate region (5) of said airfoil portion (1).

10. The manufacturing method of claim 5 or any claim dependent on claim 5, being arranged as a stator blade of an axial flow steam turbine, wherein said airfoil portion (1) has holes and/or slots (12) extending from said airfoil surface to said internal cavity (4), wherein one or each of said two parts (P1, P2) is made of metallic material.
